# EUROPEAN PATENT SPECIFICATION

(11) **EP 1 849 510 B1**
(45) Date of publication and mention of the grant of the patent: **13.08.2014**
(21) Application number: 07008097.3
(22) Date of filing: 20.04.2007
(51) Int. Cl.: B01D 15/08, B01D 53/22, B01D 67/00, B01J 20/06

(54) **Composite inorganic membrane plate for affinity chromatography**
Anorganische Verbundstoffmembranplatte zur Affinitätschromatography
Plaque de membrane inorganique composite pour la chromatography d'affinité

(30) Priority: 26.04.2006 IL 17527006
(43) Date of publication of application: 31.10.2007
(73) Proprietor: Acktar Ltd., 82000 Kiryat Gat (IL)
(72) Inventor: Katsir, Dina, Lehavim 85338 (IL); Finkelstein, Zvi, Asseret 25243 (IL); Feinman, Daniel, Moshav Arugot (IL)
(74) Representative: Pearl Cohen Zedek Latzer Baratz UK LLP

(56) References cited:
- EP-A- 1 568 409
- WO-A-2004/103537
- WO-A1-02/092203
- WO-A1-2005/087356
- US-A- 5 976 527
- US-A- 6 152 986
- US-B1- 6 383 386

## Description

### FIELD OF THE INVENTION

The present invention relates to a composite membrane adapted for separation of components of fluid mixtures.

### BACKGROUND OF THE INVENTION

Inorganic membranes are widely used in separation and filtration applications. Inorganic membranes are more versatile than organic polymeric membranes, e.g. they can operate at elevated temperatures, metal membranes being stable at temperatures ranging from 500°C to 800°C, while many ceramic membranes are stable at over 1000°C. They are also much more resistant to chemical attack. In many harsh operational environments, organic membranes will not perform well, and may not survive at all. For these environments, only inorganic membranes offer needed solutions. Because of their versatility, inorganic membranes can prove a benefit to the pulp and paper industry, the food and beverage industry, waste water cleaning, sea water desalination, and energy production (advanced batteries and fuel cells).

A particular commercial application of inorganic membranes is the selective removal of hydrogen from gas mixtures produced in coal gasification, steam reforming, partial oxidation, auto-thermal reforming, biomass pyrolysis and direct biomass gasification, typically conducted at high temperatures (500°C-900°C). Palladium and palladium-based (e.g. Pd alloy) membranes are considered to be good candidates for the high-temperature processes of hydrogen recovery from such reaction gas mixtures, typically containing CO, CO₂ and hydrocarbons (mainly CH₄). These membranes are permeable to hydrogen, while retaining other gases. This permselectivity, with respect to hydrogen, can be explained by a special mechanism of hydrogen permeation through palladium. When hydrogen contacts a palladium or palladium-based membrane, its molecules (H₂) dissociate and hydrogen atoms (H) diffuse into the membrane. In the atomic form, hydrogen can selectively pass from the reaction gas mixture through the membrane. The selectively-extracted hydrogen atoms then reform into H₂ molecules. Such be-havior of palladium and palladium-based membranes with respect to hydrogen may be regarded as catalytic activity of palladium in the reaction of H₂-dissociation. Though other metals are reported to exhibit permselectivity with respect to hydrogen (e.g. Ni, Pt, V, Nb, Ta), palladium and palladium-based membranes remain the major commercially used membranes for hydrogen separation.

For commercial use, the membrane must ensure, besides high permselectivity with respect to hydrogen, high flux of hydrogen. It is known in the art that the flux of a permselective component is inversely proportional to the membrane thickness. This requires very thin membranes, and a need to use a support for such thin membranes. Thin Pd-based membranes are typically supported by porous metallic or ceramic substrates. The porous substrate primarily provides mechanical integrity, though it acts also as a low selectivity membrane. In the art, the terms "composite membrane" or "membrane ensemble" are usually used for designating the system comprising a membrane and a support (substrate).

If a metal or metal alloy is used as a substrate for the membrane, the following problems can arise: 1) different thermal expansion of the membrane material and the substrate material; 2) alpha and beta hydride phase transition; and 3) intermetallic diffusion between the membrane and the substrate materials. The first phenomenon results in destroying the composite membrane during the separation cycles, while the second decreases the permeability of the membrane to hydrogen. All the foregoing phenomena influence the effective life of the composite membrane.

As mentioned above, the typical membrane material is palladium. However, in industrial applications, alloys of palladium with one or more other elements, such as Ag, Cu, Ru, In, Au, Ce, Y, Ta, V, Ho are used. A disadvantage of pure palladium is that in the presence of hydrogen alpha and beta hydride phase transitions occur under 290°C. These phase transitions result in embrittlement of the membrane after repeated cycling, and therefore must be avoided. By alloying Pd with the above mentioned elements the phase transition can be suppressed. In particular, Pd-based alloys containing palladium with silver (20-30 wt.%), or palladium with Cu (40 wt.%) are known as membrane constituents. Moreover silver alloy membranes exhibit higher permeability (up to about 70%) than the membranes utilizing pure palladium.

Intermetallic diffusion is a phenomenon where formation of an alloy on the interface between two contacted metals occurs, due to the diffusion of one metal into another. The rate of this diffusion is greatest when the metal is at or above the temperature, which is equal to one-half of its melting temperature. For example, for palladium and stainless steel these temperatures are 640°C and 550-560°C, respectively. The lower of these temperatures determines the temperature at which a significant increase in intermetallic diffusion occurs.

Methods for the manufacture of composite membranes for hydrogen separation include either mounting a thin palladium foil on a highly permeable relatively low selectivity porous substrate, or depositing palladium on such substrate. Deposition methods for producing a palladium layer on the substrate require less palladium than the methods in which bulk palladium is applied. Besides, composite membranes produced by deposition techniques exhibit higher permeability compared to foil membranes.

The two main approaches known in the art for preventing intermetallic diffusion are: elimination of the metallic substrate and fabrication of intermediate barrier layers.

A method for preventing intermetallic diffusion by producing an intermediate barrier layer is disclosed in US 6,152,987 (Ma et al.). This patent describes a process in which a porous stainless steel cap was oxidized with oxygen at 900°C for 4 hours followed by surface activation in solutions of SnCl₂ and PdCl₂, rinsing with HCl and water, repeated between 2 and 5 times, and subsequent drying for 2 hours at 120°C. Following surface activation, palladium was deposited on the activated surface by an electroless plating procedure repeated 14 times. The total time of plating was 25 hours. In other variations of the process, the oxidation temperature was 600°C and 800°C. In another embodiment, the oxidizing process was replaced by nitriding, carried out at 980°C for 20 hours, while the stage of palladium deposition was repeated 12 times and continued 20 hours in all. The fabricated palladium layer had a thickness between 25.4 and 32.5 µm depending on duration of the deposition stage. The disclosed method involves a large volume of liquids and requires a considerable expenditure of time, as well as maintaining extremely high temperatures for a relatively long period.

US 5,782,959 (Yang at al.) discloses a process for preparing a composite membrane in which an intermediate layer is formed by a sol-gel method in a tube-shaped alumina asymmetric support, consisting of a thin dense inner layer and a thick coarse outer layer. Afterwards, the support is modified by absorption of palladium acetate solution into the pores. Finally, palladium is vaporized under a nitrogen stream which results in the deposition of the vaporized palladium onto the pores. In the disclosed patent, no other component is doped to palladium, therefore such membrane is expected to be brittle.

A laminated composite membrane is described by Howard et al. in Journal of Membrane Science, vol. 241 (2004), pp. 207-218. The authors teach an assembly consisting of a membrane (foil composed of Pd-Cu alloy), a porous alumina sheet, acting as a barrier layer, and a rigid porous Hastelloy^{®} support. The porous alumina sheet was simply sandwiched between the foil and the support, but not bonded to either structure. Although the authors report that in the test cycle after 72 hours at temperature 1038° K or above no degradation in membrane performance was registered, they also noted that after the assembly was disassembled, the barrier layer cracked. The manufacturing method of the disclosed membrane is rather complicated and the produced membrane cannot ensure high fluxes of hydrogen.

US 2003/0068260 (Wellington et al.) teaches a steam reforming reactor comprising two concentric tubes with a catalyst in an annulus therebetween. The inner tube includes a hydrogen selective membrane in the form of a thin film deposited by electroless plating. The membrane material can by any of Group VIII transition metals or alloys thereof. Optionally, the membrane film is deposited on a support, which can be oxide, carbide or nitride of any element belonging to Groups IIIA, IIIB, IVA and IVB of the Periodic Table. Alternatively, the support can be composed of porous stainless steel, Hastelloy® or Inconel^{®}. The disclosed apparatus requires a relatively large membrane surface in order to handle industrial quantities of reforming gas, because of the low value of the ratio of membrane surface area to volume of apparatus. For example, in a reactor with a 1/2-inch inner tube diameter encased in a 1-inch diameter tube, the calculated value of this ratio is 3.2 cm²/cm³ for the membrane section and 1.6 cm²/cm³ for the entire reactor.

In the last few years, there have appeared publications demonstrating that microfabrication technology (originally developed for semiconductors) offers a new approach for the fabrication of thin and defect-free Pd-composite membranes. The resultant thin films increase both flux and permselectivity of the membrane. According to this method, Pd alloy films are first deposited on the dense and smooth surface of microfabricated supports. Due to the surface quality the films cover the support completely, leading to defect-free membranes. Next, the supports are partially etched from the backside to create pathways for the gases to the Pd surface. The microfabricated supports allow the deposition of very thin films and can be made in forms that have a low mass transfer resistance. Examples of the foregoing publications are:
- S.V. Kamik, et al. Journal of Microelectromechanical Systems, vol. 12 (2003), No 1, pp. 93-100.
- H.D.Tong, et al. Journal of Microelectromechanical Systems, vol. 12 (2003), No 5, pp. 622-629.
- H.D. Tong, et al. Journal of Microelectromechanical Systems, vol. 14 (2005), No 1, pp. 113-124.

A membrane obtained by the method of the foregoing publication of S.V. Kamik, et al. has a limited size and is unsuitable for the separation of large volumes of hydrogen. Unlike this, the method disclosed in the publications of H.D. Tong, et al. overcomes this limitation. These authors disclose a technique for the manufacture of a robust wafer scale separation module, comprising a thin (500-nm-thick) Pd-Ag alloy membrane on a supporting microsieve silicon wafer. The proposed module may be numbered up easily to create a system with high hydrogen throughput, suitable for industrial applications. However, the disclosed technique is very complicated and expensive, which can be seen from the following description. The wafer is coated with 0.2 µm of wet-thermal SiO₂ and 1 µm of low-stress silicon-rich silicon nitride (SiN) by means of low-pressure chemical-vapor deposition, producing thereby parallelogram-shaped structures of 600 by 2600 µm. Further, the produced structures are aligned and imprinted on the backside of the wafer by standard photolithography, followed by dry etching of the SiN in a CHF₃+O₂ plasma and wet etching of the oxide layer in buffered hydrofluoric acid. Afterwards, the wafer is immersed in 25% KOH solution at 75°C to etch the silicon until the SiO₂ layer is reached, thus forming an array of suspended bilayer SiN/SiO₂ membranes. Then, standard lithography and dry etching of SiN are carried out on the front-side of the wafer to pattern a microsieve with circular openings of 5 µm on the suspended SiN/SiO₂ membranes. After patterning, films of Pd-Ag alloy are deposited on the flat side of the membrane by simultaneous sputtering from two pure targets, one of Pd and one of Ag (both 99.999%) on 20 nm of sputtered titanium that acts as an adhesion layer. First the SiO₂ and then the titanium are removed by etching with a buffered HF solution through the opening of the sieves to reveal the back surface of the Pd-Ag film. Finally, the silicon wafer is bonded between two thick glass wafers by a four-electrode anodic bonding technique. Before the bonding procedure, powder blasting is used to create a flow channel of 200 µm depth and a buffer zone of 1000 µm in the glass wafers. According to the authors the cost of this assembly having an area of 182 cm² (6-inch Si wafer) is 340 dollars, one half of which is the cost of materials, and the second one is the cost of clean room operations.

US 6,238,465 (Juda et al.) discloses a method for producing thin Pd-Cu membranes, wherein one metal is in the form of a thin foil, while another is a deposit, applied by electroless plating or vacuum sputtering. The patent does not specify a substrate on which the disclosed membrane has to be disposed. If the membrane is intended to be disposed on a metallic substrate, it is not clear how the authors solve the problem of different thermal expansion of the substrate and the membrane materials and the problem of intermetallic diffusion.

Application of inorganic membranes has recently expanded in such fields as biochemistry, molecular biology and like disciplines, where there is a demand for faster and more accurate techniques for recovery, purification and analysis of small amounts of biological substances such as DNA segments and proteins. Such methods as ion-exchange chromatography, affinity chromatography, and other chromatographic separation processes require as a mandatory step the separation and recovery of these biological materials from gels, broths, or like media, conventionally using either various types of adsorption columns such as ion exchange columns, or affinity-binding techniques and the like.

US 5,976,527 (Siol et al.) teaches a system comprising latex particles which system is capable for immobilizing substances containing nucleophilic groups, e.g. enzymes or proteins. The system is formed by aggregating the latex particles or by bonding the latex particles to a porous support of high surface area.

US 5,904,848 (Wong et al.) discloses a porous membrane composed of a normally solid thermoplastic synthetic resin, e.g. polytetrafluoroethylene, and a controlled pore glass. The surface of the membrane is modified, for example, by silanization to provide functional groups (e.g., amino, hydroxyl, carboxyl, epoxide, aldehyde, phenyl) for the binding of biological moieties such as cells and biomolocules.

US 6,686,479 (Bruening et al.) describes a method of separation of amine or aminoacid enantiomer from its counter-enantiomer with the aid of a selective binding material. Said material is composed of at least one ligand covalently bonded to a particulate solid support through a hydrophilic spacer having the formula SS-A-X-L coated with a hydrophobic organic solvent. In the above-mentioned formula SS is a porous or non-porous particulate inorganic or organic polymer solid support, A is a covalent linkage mechanism, X is a hydrophilic spacer grouping, and L is a bisnaphthyl crown ether ligand molecule having at least two naphthyl groups.

US 2003-0222015 A discloses multi-layer embodiments of CVD silica layers, which may be arranged on porous stainless steel.

WO 2005/087356 A1 discloses a separation membrane exhibiting high separation performance while having a high permeation rate at the same time. The separation membrane comprises a porous base composed of a ceramic sintered material mainly containing alumina and a zeolite thin film formed over the surface of the porous base.

### OBJECTS OF THE INVENTION

An object of the present invention is to provide a composite membrane for separation in fluid systems, which membrane comprises a substrate, a ceramic layer and a selective sorbent layer.

A further object of the present invention is to provide a composite membrane as described above, exhibiting improved mechanical strength and resistance to thermal stresses.

In the present invention the term "separation" is intended to encompass any separation effected with the aid of a membrane of at least one kind of targeted molecules, ions or biological species in its mixtures with other kinds of molecules, ions or biological species, or alternatively releasable or non-releasable immobilization (isolation) by the membrane of the aforementioned targeted molecules, ions or biological species.

### SUMMARY OF THE INVENTION

The present invention provides a composite membrane suitable for use as a plate affinity chromatography and adapted for separation of components of fluid mixtures, and which includes a porous, essentially continuous, vacuum-deposited ceramic layer comprising at least one metal oxide selected from the group consisting of oxides of aluminum, titanium, niobium, zirconium, silicon, thorium, cadmium and tungsten, and wherein there is a disposed on the surface of said ceramic layer a selectively sorbent layer, wherein the selectively sorbent layer is an affinity ligand.

Preferably, in the above-described membrane, at least one of the following further conditions is fulfilled, namely:
(i) the ceramic layer has a fractal surface structure selected from dendrite, cauliflower-like and coral-like fractal surface structures;
(ii) the ceramic layer consists essentially of a mixture of metal(s) and oxide(s) thereof, preferably a mixture of aluminum metal and alumina;
(iii) the supported ceramic layer is disposed on both sides of the substrate, and both ceramic sides being also bonded to each other through the pores of the substrate, thereby imparting improved mechanical strength to the membrane.

More preferably in the above membrane, the substrate is selected from stainless steel mesh and etched aluminum foil.

The sorbent layer(s) selectively bind(s) to the species of at least one component of the separated mixture. An example of the latter case is affinity chromatography, where an affinity ligand, specific for a binding site on the target molecule, is coupled to an inert chromatography matrix. Materials of the sorbent layer can be, for example, amino acid resins. In this modification of the membrane, the substrate of the membrane is not restricted in view of its porosity and pore width.

In a particular embodiment of the membrane which includes a multi-layer system, the membrane is disposed on one side only of the substrate.

In an alternative embodiment, the multi-layer system is disposed on both sides of the substrate.

Preferred substrates for this membrane are also stainless steel mesh or through-hole type etched aluminum foil.

### BRIEF DESCRIPTION OF THE DRAWINGS

FIG. 1 is a schematic cross-sectional view of an embodiment of a composite membrane not covered by the invention, with ceramic and metallic layers.
FIG. 2A is a schematic cross-sectional view of an embodiment of the composite membrane of the invention, with ceramic permselective layer having a cauliflower structure.
FIG. 2B is a schematic cross-sectional view of an embodiment of the composite membrane of the invention, with a metallic permselective layer disposed on a ceramic layer having a cauliflower-like structure.
FIG. 2C is a SEM micrograph (top view) of the ceramic layer having a cauliflower-like structure produced by the method described hereinbelow in Example 4.
FIG. 3A is a SEM micrograph (cross-sectional view) of the ceramic layer having a dendrite structure, produced by the method described hereinbelow in Example 1.
FIG. 3B is an example of a SEM-micrograph (cross-sectional view) of the ceramic layer having a coral-like structure.
FIG. 4 is a schematic cross-sectional view of an embodiment of the composite membrane of the invention with a ceramic layer and a selective sorbent layer.
FIG. 5 is a schematic perspective view and a cross-section of a membrane element of the spiral-wound type.
FIG. 6 is a schematic cross-sectional view of the membrane element of the spiral-wound type described in FIG. 5, placed in a pressure casing.
FIG. 7 is a schematic cross-sectional view of a membrane module of the tubular type.
FIG. 8 is a pore width distribution chart of the ceramic layer having a dendrite structure, produced by the method described hereinbelow in Example 1.
FIGS. 9A and 9B present a top view of a composite membrane having a ceramic cauliflower-like layer disposed on a stainless steel mesh substrate, obtained with an optical microscope at a magnification of 700 and 1100, respectively.
FIG. 10 is a pore width distribution chart of the ceramic layer having a cauliflower-like structure, produced by the method described hereinbelow in Example 2.
FIG. 11 is a SEM micrograph (cross-sectional view) of the ceramic layer having a dendrite structure, produced by the method described hereinbelow in Example 3.
FIG. 12 is a pore width distribution chart of the ceramic layer having a dendrite structure, produced by the method described hereinbelow in Example 3.
FIG. 13 is a pore width distribution chart of the ceramic layer having a cauliflower-like structure, produced by the method described hereinbelow in Example 4.

### DETAILED DESCRIPTION OF THE INVENTION

As has been stated above, in the membrane according to the invention, the substrate generally defines obverse and reverse sides. This means that in general, the substrate, considered as a three-dimensional object, will have a configuration in which two dimensions are much greater than the third dimension, as in e.g. a foil or plate, or a self-supporting film. However, this laminar nature of the substrate does not preclude such configurations as hollow geometrical shapes such as tubes, cylinders and helices, as well as spiral-wound substrates.

Where the ceramic layer consists essentially of a mixture of metal(s) and oxide(s) thereof, such mixture imparts additional mechanical strength to the ceramic layer. In the embodiments where the composite membrane includes a layer of metal on the surface of the ceramic layer, the metal can be e.g. palladium, or an alloy of palladium with other metals such as those mentioned previously herein. Where the substrate is stainless steel mesh or aluminum foil, these are examples of substrates which can impart to the composite membrane sufficient flexibility enabling it to be rolled up and unrolled.

Typically, the ceramic layer of the membrane of the present invention has a structure which is characterized by a relatively wide range of pore width, i.e. possessing diverse pore widths. An example of such a layer is a fractal structured layer, which can be e.g. of dendrite, cauliflower-like or coral-like types.

In the aspect of the composite membrane not covered by the present invention, which includes a multi-layer system, this system comprises more than one ceramic layer and at least one metallic layer; the metallic layer(s) and the ceramic layers are arranged in such a manner that each ceramic layer and each metallic layer are alternated. The metallic layer, if applied, can be either porous or non-porous (dense). Both the ceramic layer and the metallic layer, if present, are applied by a vacuum deposition technique.

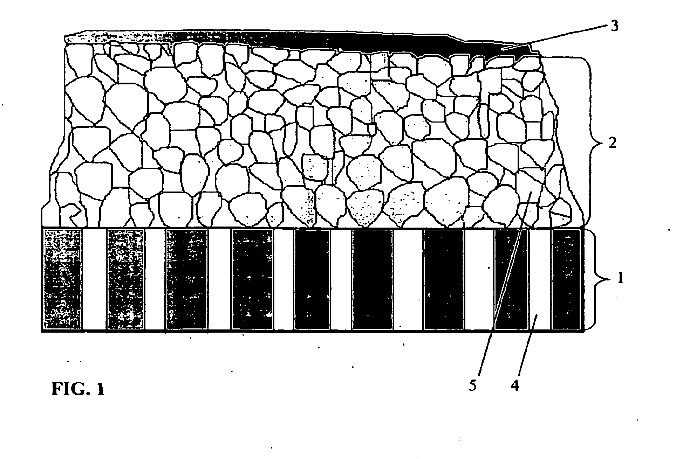

The structure of the composite membrane not covered by the present invention is illustrated schematically by FIG. 1, where **1** denotes a porous substrate, **2** denotes a porous ceramic layer, **3** denotes an optional metallic layer, **4** represents a pore of the substrate, and **5** represents a pore of the ceramic layer.

In the explanatory example of of the membrane with metallic layer(s) at least one of the ceramic or metallic layers is a permselective layer, that is a layer responsible for selective permeability therethrough of at least one component of the mixture and retention of the rest of the components (or single component).

In a modification of the membrane with sorbent layer(s) the separation mechanism differs in that the sorbent layer(s) selectively sorb(s) the targeted component(s) or biological specie(s) thus separating them from other components or immobilizing them on the binding surface.

As mentioned above, the ceramic layer comprises at least one metal oxide selected from the group consisting of oxides of aluminum, titanium, tantalum, niobium, zirconium, silicon, thorium, cadmium and tungsten and is produced by a vapor deposition technique. In the present invention, metal oxide(s) of the ceramic layer is (are) produced as a result of a chemical reaction occurring in the vacuum environment between a metal which is converted from the solid phase to the vapor phase, e.g. by thermal evaporation, and an oxidizing agent, e.g. gaseous mixture comprising oxygen. Thus the process that we call "deposition" comprises the following stages: changing the state of the metal from the solid phase to the gaseous phase, chemical reaction, and the deposition stage proper. The process conditions can be chosen so as to produce a coating composed of metal oxide(s) only, or a coating composed of a mixture of metal oxide(s) with metal(s). Thus, in addition to metal oxides the ceramic layer can contain metals, such as aluminum, titanium, tantalum, niobium, zirconium, silicon, thorium, cadmium and tungsten. Metal component(s) of the ceramic coating may improve its mechanical strength, and as a result the mechanical strength of the entire membrane. The preferable material of the ceramic layer is aluminum oxide (alumina) or a mixture of alumina with aluminum.

The substrate of the composite membrane can be a metal substrate, either rigid or flexible. In the latter case, the composite membrane desirably exhibits sufficient flexibility enabling it to be rolled up and unrolled. The flexibility of the membrane enables its usage in compact membrane elements, e.g. of spiral-wounded type and in long (1 to 3 meters length) tubular membrane elements.

As to the sorbent layer, the mechanism of its functioning, the methods of its deposition and possible materials will be discussed further below.

As pointed out above, the ceramic and the metallic layers are fabricated by a vacuum deposition technique, e.g. physical vapor deposition (PVD) including thermal evaporation, electron-beam evaporation, sputtering, or by e.g. chemical vapor deposition. Both layer types (ceramic and metallic) can be produced by the same deposition technique, or by different deposition techniques.

In a particular embodiment, the ceramic layer is disposed on both sides of the substrate thus defining two ceramic layer surfaces, both ceramic layers being also bonded to each other through the pores of the substrate, thereby imparting improved mechanical strength to the composite membrane. The deposition of the ceramic layer on the second side and the deposition thereon the sorbent layer is performed similarly to the deposition on the first side of the substrate. The properties (composition, structure, porosity, average pore width thickness, etc.) of the ceramic and sorbent layer deposited on the second side of the substrate can be either same, or different from those of the layers deposited on the first side.

The ceramic support must be sufficiently porous in order not to reduce significantly the flux of the permeate component or components. Typically, the techniques used so far for increasing porosity of materials, are directed to the increase of the surface area by producing irregularities on the surface. Examples of applications which employ these techniques are lithographic printing plates, electrodes for electrolytic capacitors, and many others. However, such techniques, being applied to the ceramic layer, would result in a surface with irregularities of relatively big size, thereby contradicting the requirement of a substantially smooth surface. In the present invention the two foregoing contradictory requirements are reconciled in the following way.

It is known in the art that vacuum deposition techniques can fabricate coatings with the desired surface structure (morphology). More specifically, it is possible to control the structure of the coating by the appropriate selection of raw materials (e.g., metals, oxidizing agents) and process conditions (flow and composition of the oxidizing agent, pressure, etc.). In the present invention, the raw materials and the process conditions are selected so as to preferably impart a fractal surface structure to the ceramic layer, that is, a surface composed of fractals. Fractals are unusual, difficultly defined, mathematical objects which observe self-similarity, so that the parts are somehow self-similar to the whole. This self-similarity feature implies that fractals are essentially scale-invariant - you cannot in principle distinguish a small part from the larger structure, e.g. a tree branching process.

Coatings having fractal structures are described in the prior art, e.g. US 6,933,041 and US 6,764,712 (both Katsir et. al), US 5,571,158 (Bolz et al), US 6,974,533 (Zhou), US 6,994,045 (Pazkowski). For example, US 6,933,041 teaches a porous coating, produced by a vacuum deposition technique, composed of a mixture of valve metal and its oxide. The described coating has a fractal structure, particularly, a cauliflower-like structure and is used in applications where high surface area of the substrate is required, e.g. electrodes of electrolytic capacitors.

Coatings with a fractal surface structure are characterized by pores of diverse width in the sense that the width of the pore canal covers a relatively wide range of values. Based on this feature the inventors consider fractal-structured coatings (ceramic layers) as ideal candidates to serve as a support for the metallic layer(s) or sorbent layer(s) of the composite membrane of the present invention. On the other hand, the layer with a fractal-like structure also contains pores of relatively large width, therefore, such a layer does not reduce significantly the flux of permeate, e.g. hydrogen. As to the embodiment with sorbent layer(s) relatively small (in view of the width) pores of the ceramic layer(s) facilitate an adhesion of the affinity ligands, while relatively big (in view of the width) pores facilitate binding of the species of the bound material.

Unlike fractal-structured coatings of the cited prior art, the fractal structure of the layers (coatings) of the present invention is used not primarily for increasing the surface area of a coating, but rather for producing a surface structure having diverse pore canal widths.

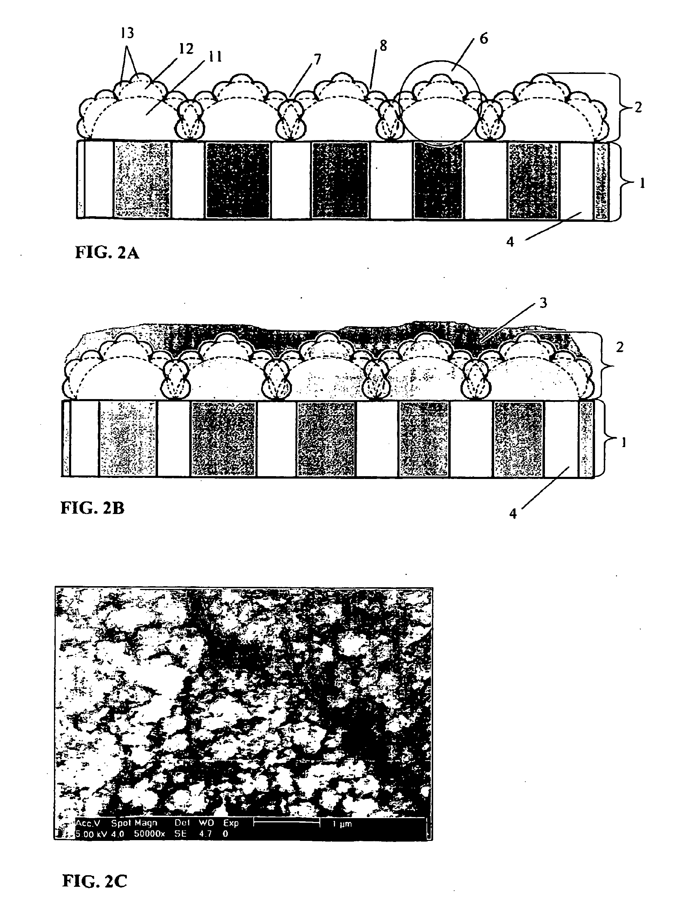

The fractal-structured coatings can be better understood from the following explanation, in which a certain type of fractal structure, namely the cauliflower-like structure, is taken as an example. The membranes with cauliflower-like structure of the ceramic layer are schematically illustrated by FIGS. 2A-C, in which FIG. 2A shows the membrane without a metallic layer, FIG. 2B shows the membrane with a metallic layer, and FIG. 2C shows a SEM micrograph (top view) of the ceramic layer with a cauliflower-like structure deposited on a through-hole type etched aluminum foil.

In FIGS. 2A and 2B, numerals **1** to **4** designate the same elements as in FIG. 1. It may be noted, that the described structure is characterized by a plurality of cauliflower "bodies" **6.** Voids, i.e. spaces within the coating which are not filled by the cauliflower "bodies" are illustrated by pores **7** and **8** of different size. Each "body" consists of a "head" **11** and "florets" **12**, the "florets" are branched off the "head" to which they are attached. Each "floret" **12** in its turn has smaller "florets" **13**, etc. Thus, the structure is characterized in that each child floret is self-similar to its parent (i.e., the floret to which it is attached). Each cauliflower "head" **11** can be considered as a grand parent with respect to the floret of any level (generation). The described structure resembles a tree structure in which the trunk of the tree corresponds to the head of the cauliflower, and the branches of the tree correspond to the florets.

It is clear from the foregoing description that the cauliflower-like structure is characterized by the florets of diverse width and by pores of diverse width. As a result, the prior art problem of delamination of the permselective layer from its supporting surface, is avoided. On the other hand, big heads, being located in a lower sub-layer, ensure mechanical strength of the support. Thus, an asymmetric structure of the support, which includes pores of diverse width, is preferred. Narrow pores form a relatively fine smooth surface on the coating, while wide pores being located between the cauliflower heads, form relatively straight canals, oriented substantially in the transverse direction. Relatively straight, wide pores oriented in the transverse direction do not substantially reduce the flux of hydrogen.

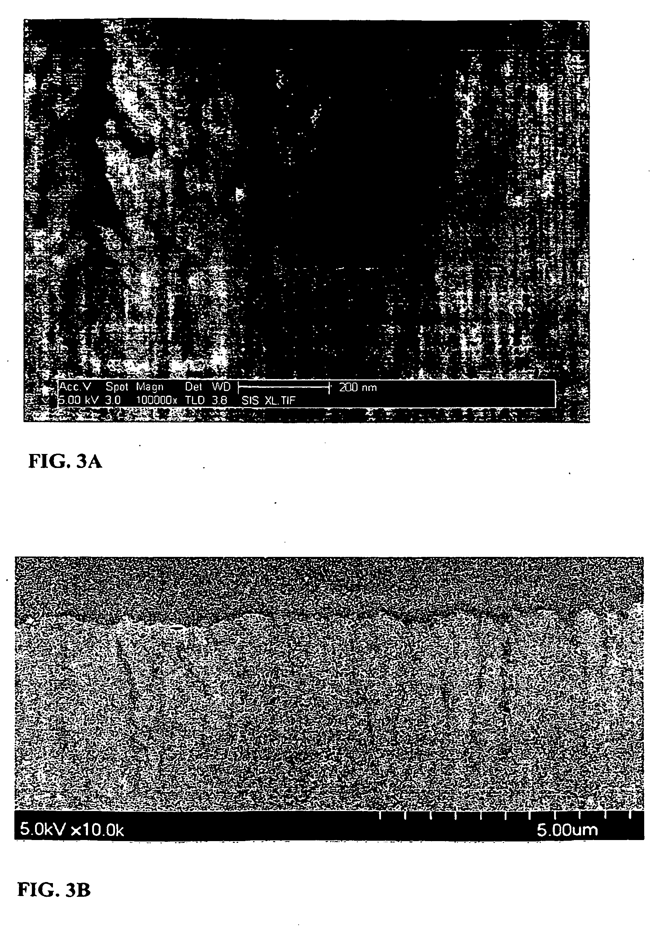

Other fractal structures of the ceramic vacuum deposited coatings of the present invention may be of dendrite (FIG. 3A) and coral-like (FIG. 3B) types. It is noted that the geometric shape of fractals (i.e., fractal "bodies") for dendrite and coral-like types are different from each other and from the cauliflower-like type, but all three types of structure are characterized by self-similarity.

The preferred material for the ceramic layer is aluminum, or an aluminum/alumina mixture, in which alumina can be either in γ-modification or in α-modification. However, other materials capable of forming a layer with similar properties (mechanical strength, surface structure, etc.) can be used alternatively.

The ceramic layer may be deposited, e.g. by one of the following vacuum deposition techniques: thermal evaporation, e-beam evaporation, sputtering, or chemical vapor deposition. Different deposition techniques can be employed for depositing different layers, for example vacuum evaporation and sputtering. It will be appreciated by those skilled in the art, that the materials for the ceramic layer are not limited to the above-mentioned metals, metal oxides and metal alloys. As to the ceramic layer, any material, within the definition herein, which is capable of forming a fractal structure with similar characteristics (width of heads and florets, pore width distribution, etc.) also can be used.

The substrate, which is an essential element of the composite membrane of the invention, should be desirably mechanically strong and flexible.

Additionally, the pores must be relatively wide to allow permeate to pass readily through the substrate, but not too wide to detract from adequate support of the ceramic layer. In view of these desired properties, a stainless steel mesh and a through-hole type etched aluminum foil are preferably used. In the case of stainless steel mesh, the preferred characteristics of the substrate are as follows: (a) thickness between 36 µm and 42 µm, more preferably 38 ± 2 µm; (b) aperture size between 33 µm and 41 µm, more preferably 46 µm; (c) strand width less than 30 µm, more preferably 18 µm; and (d) open area is between 42% and 52%, more preferably 51%.

The material of the substrate is not essentially limited to the foregoing materials. Any porous material which has similar properties (flexibility, mechanical strength, thickness, aperture size, etc.) also can be used.

The preferred thickness of the ceramic layer(s) is between 5 and 40 µm, more preferably between 10 and 20 µm.

In an embodiment of the membrane according to the invention, optional metallic layer(s) is (are) replaced with sorbent layer(s). Said sorbent layer(s) selectively bind(s) to the species of at least one component of the separated mixture (e.g. in the case when the sorbent layer is an amino acid resin). The selective binding can be either releasable, that is the selectively bound substance or biological specie can be further released, e.g. by elution, or non-releasable. As mentioned above, typical application of a biological separation based on the principle of selective binding is affinity chromatography, which is widely used in biological separations, including immobilization (isolation) of the targeted species. Typically, the substances which can be separated or immobilized with the membrane of this modification are proteins, nucleic acids, polysaccharides, lipids, terpenoids, etc, or biological species. Other possible applications of this membrane are ion-exchange chromatography and bioreactors. When used as a bioreactor, for example, an enzyme may be affixed to the activated sites on the membrane, either directly or through a ligand. A carrier liquid containing the substance to be lysed is then passed through the membrane so that the bound enzyme acts upon such substance.

The substrate of the membrane of this embodiment is not restricted in view of its porosity and pore width. In other words, the substrate can be either porous with unrestricted porosity and pore width or non-porous (dense). An example of a dense substrate is a conventional metallic foil, e.g. aluminum foil.

In this embodiment the selective sorbent layer can be disposed on one or both ceramic surfaces. A membrane having selective sorbent layers on both the obverse and reverse sides enhances its sorbent capability by a factor of 2.

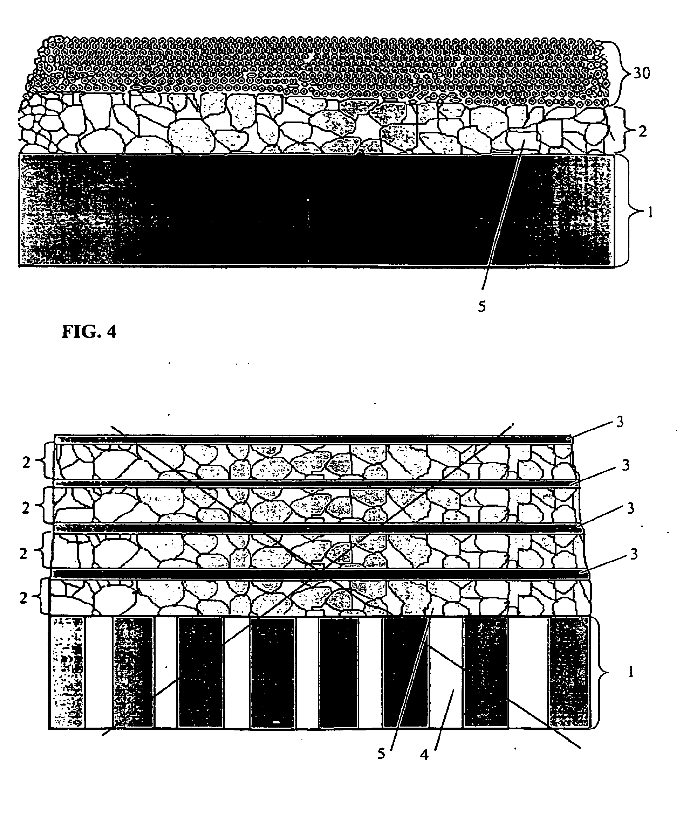

FIG. 4A illustrates an exemplary membrane according to this embodiment with a single selective sorbent layer, in which numeral 30 designates the sorbent layer, numeral 1 designates a substrate, which in this embodiment can be dense or porous, and other numerals have the same meanings as in FIG 1. In the case wherein the sorbent layer comprises a substance which selectively binds to the species of at least one component of the mixture, the membrane according to this modification can be used for a separation, for example, by the method of batch affinity chromatography. Examples of the aforesaid selectively-binding substance include amino acid resins (e.g. L-Lysine Agarose Lyophilized powder), avidin biotin matrices (e.g., EZview™ Red Streptavidin affinity gel), chelating resins (e.g., Tris [Carboxymethyl] Ethylenediamine-Agarose lyophilized powder), and other materials known in the art. The foregoing materials are known in the prior art as affinity ligands.

The technique used for depositing the sorbent material on the surface of the ceramic layer(s) depends upon the properties of the material to be deposited. For example, affinity ligands can be applied by surface modification, as, for example, disclosed in US 5,904,848. The preferable thickness of the ceramic layer(s) of the membrane according to this modification is 5 to 10 µm, while preferable thickness of the selective sorbent layer(s) is 5 to 100 µm. More preferable thickness of the selective sorbent layer(s) depends upon the application of the membrane.

The composite membrane of the present invention can be manufactured in the form of flexible sheets or in the form of continuous long rolled webs. Typically, the membranes in the form of sheets are produced in an apparatus operating in a batch mode, while the membranes in the form of continuous rolled webs are typically produced in an apparatus operating in a continuous mode. In the latter case, different deposition techniques, for example vacuum evaporation and sputtering, can be employed for depositing ceramic and metallic layers, even under different degrees of vacuum.

For example, in a spiral wound element the composite single-sided membrane is spirally wound around a perforated hollow pipe. Such design ensures high values of the membrane surface area to unit of assembly volume ratio.

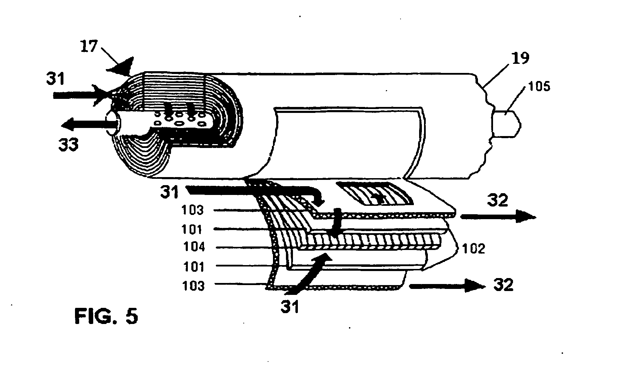

The spirally wound membrane element comprises a plurality of membrane envelopes **102** separated by feed spacers **103** (FIG. 5). The plurality of membrane envelopes **102** with feed spacers **103** therebetween are spirally wound around the outer peripheral surface of a perforated hollow pipe **105** closed from one end. Each membrane envelope consists of two composite membranes **101** and encases permeate spacer **104**. Spacers **103** and **104** are used for preventing the membranes **101** from coming into close contact with each other. Feed spacers **103** form a passage for the feed, while permeate spacers **104** form a passage for the permeate. The membrane element operates in the following way: the feed mixture **31** is introduced into the wrapped membrane from one of its ends, e.g. from end **17**. The permselective component (or components) permeate(s) through the composite membranes **101** and infiltrates through the clearances between membranes **101** along spacers **104**. Permeate **33** is removed via the opened end of the pipe, while retentate **32** is withdrawn from the end of the wrapped membrane opposite to the feed inlet, e.g. **19**. The composite membranes applied in this design are single-sided membranes with a ceramic layer and an optional metallic layer.

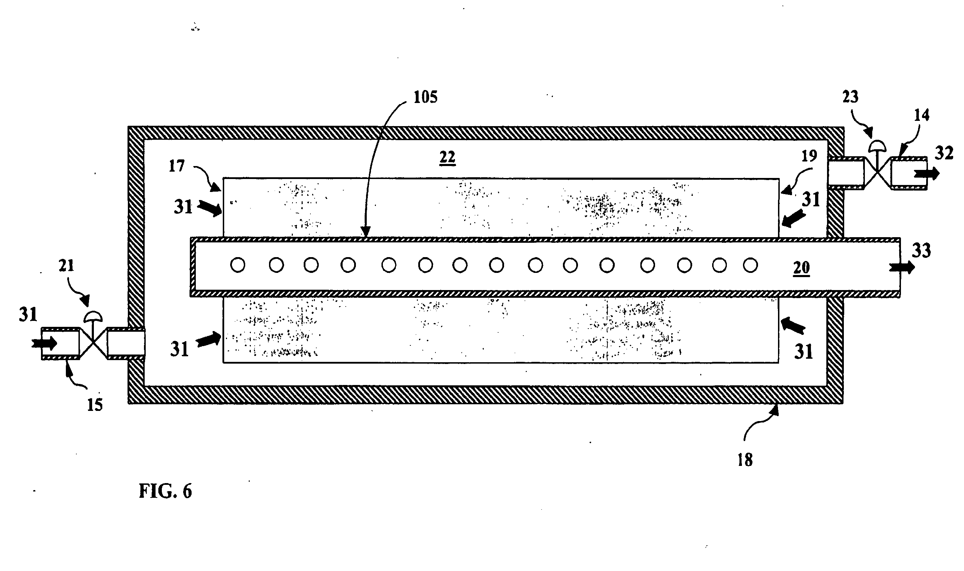

In another design the membrane element is placed in a pressure casing **18** (FIG. 6). The separation process includes two steps: permeation of the selective component (or components) and withdrawal of the retentate. In the penneation step, feed **31** is introduced under pressure through inlet **15** of casing **18**, when valve **21** is opened, and valve **23** is closed. The feed mixture enters into the membrane element mainly through its ends **17** and **19**. The permselective component (or components) of the mixture permeate(s) through the membrane and is (are) taken from the region **20** of pipe **105**. On the step of retentate withdrawal valve **21** is closed, while valve **23** is opened, and the retentate **32** is withdrawn from space **22** between the membrane element and the casing via outlet **14**.

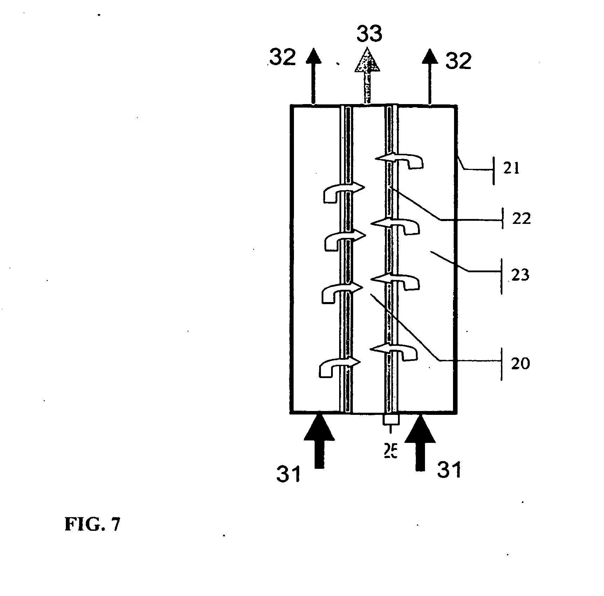

If a membrane element of the tubular type is applied, it is placed in the tubular pressure casing, thereby forming a membrane module. The membrane element of tubular type comprises composite membrane **25** in the form of a flexible sheet or roll (FIG. 7). The module comprises two concentric tubes: outer tube **21** (casing) and inner perforated tube **22**. The inner tube is wrapped from its outer peripheral surface with the composite membrane **25**. Feed **31** is introduced under pressure from one end of the module in annulus **23**. The permselective component **33** (or components) penetrate(s) through the membrane and is (are) removed from permeate section **20.** Retentate **32** is removed from annulus **23** from the opposite end of the module. The composite membrane of the present invention is advantageous in that it can be used in long (1 to 3 meters length) tubular elements and modules.

In the case where at least one chemical reaction occurs in the reaction mixture, the membrane elements and modules described in the present invention can operate as membrane reactors. They can be used to increase at least one of the following characteristics of the chemical process: yield, selectivity, conversion.

The invention is illustrated by the following non-limiting examples.

### EXAMPLE 1: Deposition of a ceramic (alumina) layer onto a stainless steel mesh substrate in a vacuum evaporation apparatus operating in batch mode

The substrate is a stainless steel mesh from KOIWA KANAAMI CO. having the following parameters: thickness of 38 ± 2 µm, aperture size 46 µm, strand width 18 µm; and open area 51% was annealed for one hour at a temperature of 450 - 500°C to remove residual oil and was placed in a deposition chamber from which air was then evacuated until a vacuum of 2•10⁻⁴ Torr was attained. An aluminum wire intended for evaporation was wound onto a drum and fed to the evaporation boat at a rate of 0.64 - 0.68 g/min, where it was evaporated by thermal resistive evaporation onto one side of the stainless steel mesh at a temperature of about 250 - 270°C, while oxygen in an amount varied between 320 cc/min and 340 cc/min, and argon in an amount varied between 45 cc/min and 50 cc/min (volume flow rates of both gases are referred to standard conditions) were introduced into the chamber. Partial pressures of oxygen varied within 6.0·10⁻⁴ - 8.0·10⁻⁴ Torr and argon within 4.0·10⁻³ - 4.5·10⁻³ Torr. Other gases (such as hydrogen, nitrogen, carbon dioxide and water vapor) in an amount significantly less than the amounts of oxygen and argon were also present in the chamber. The deposit which is a porous alumina layer having a thickness of 15 µm was applied onto the substrate at a rate of 600 to 750 A/sec. The product is a composite membrane having a ceramic selective layer.

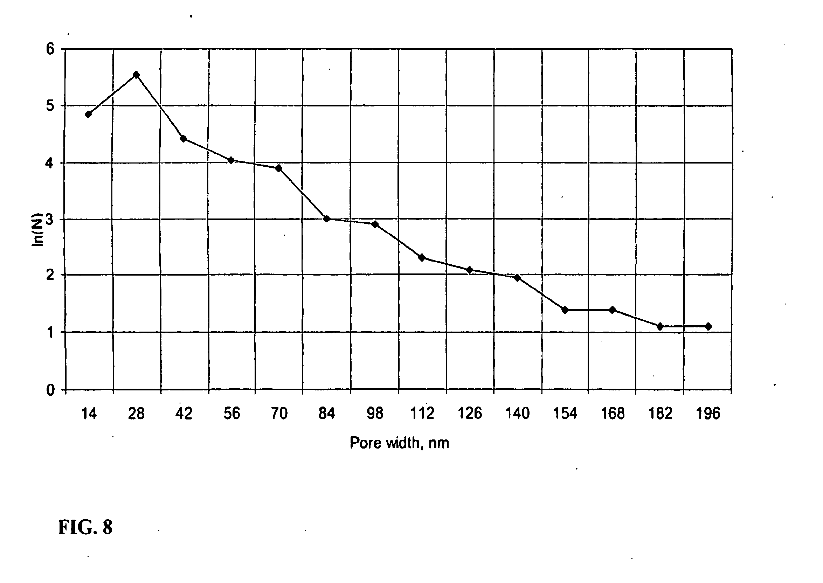

A scanning electron microscope (SEM) micrograph of the fabricated layer is shown in FIG. 3A, from which it can be seen that the fabricated layer has a dendrite structure. Further, the surface characterization was performed using a scanning electron microscope. Top-view secondary electrons (SE) images of the surface were further processed by Particle Analysis module of Digital Micrograph (GATAN Inc., USA) in order to count the number of pores of each pore width. The resulting pore distribution chart is presented in FIG. 8, in which N is the counted number of pores of the measured width. It can be seen that in the produced layer narrow pores have a width in the range of about between 14 and 42 nm, while wide pores have a width in the range of about between 154 and 196 nm.

### EXAMPLE 2: Deposition of a ceramic (aluminum/alumina) layer onto a stainless steel mesh substrate in a vacuum evaporation apparatus operating in batch mode

The substrate is a stainless steel mesh from KOIWA KANAAMI CO. having the following parameters: thickness of 38 ± 2 µm, aperture size 46 µm, strand width 18 µm; and open area 51% was annealed for one hour at a temperature of 450 - 500°C to remove residual oil and was placed in a deposition chamber from which air was then evacuated until a vacuum of 2•10⁻⁴ Torr was attained. An aluminum wire intended for evaporation was wound onto a drum and fed to the evaporation boat at a rate of 0.64 - 0.68 g/min, where it was evaporated by thermal resistive evaporation onto one side of the stainless steel mesh at a temperature of about 270 - 300°C, while oxygen in an amount varied between 90 cc/min and 100 cc/min, and argon in an amount varied between 45 cc/min and 50 cc/min (volume flow rates of both gases are referred to standard conditions) were introduced into the chamber. Partial pressures of oxygen varied within 4.5·10⁻⁵ - 5.5·10⁻⁵ Torr and argon within (4.5-5.5)·10⁻³ Torr. Other gases (such as hydrogen, nitrogen, carbon dioxide and water vapor) in an amount significantly less than the amounts of oxygen and argon were also present in the chamber. The deposit, which is a porous layer having a thickness of 20 µm, composed of aluminum and aluminum oxide, was applied onto the substrate at a rate of 500 to 600 A/sec. The product is a composite membrane having a ceramic selective layer.

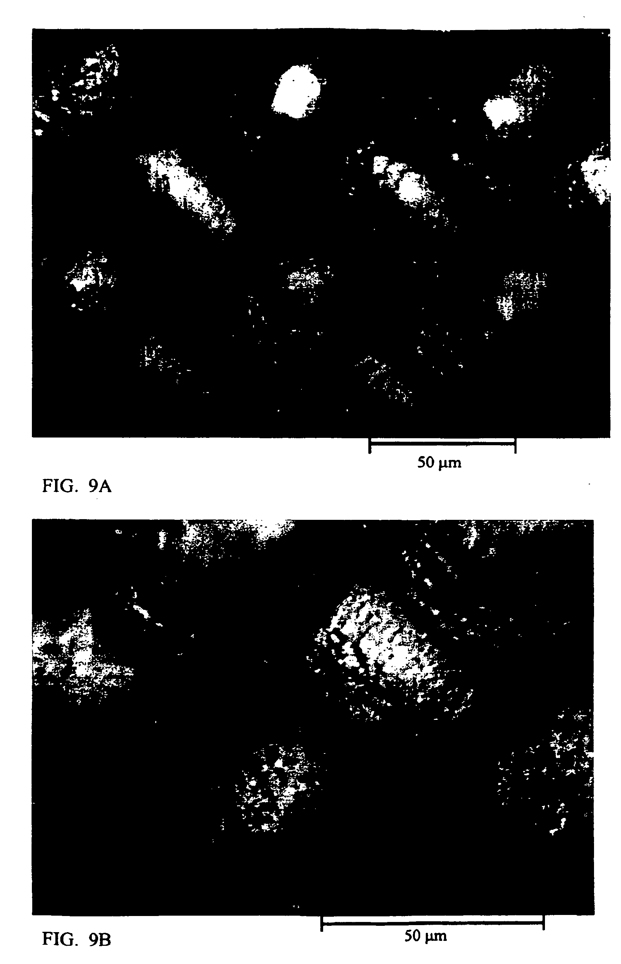

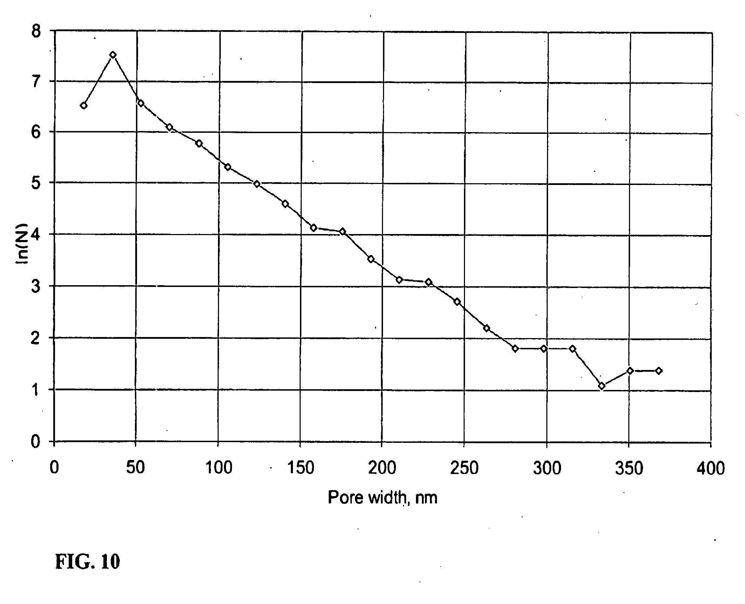

Top view images, obtained by an optical microscope, of the composite membrane are shown in FIG. 9A (magnification 700) and FIG. 9B (magnification 1100), from which it can be seen that the deposited layer has a cauliflower-like structure and repeats the relief of the surface of the substrate. Further, the surface characterization was performed using the same method and instruments as in Example 1. The resulting pore distribution chart is presented in FIG. 10, from which it can be seen that the fabricated coating has narrow pores in the width range of about between 20 and 50 nm, and wide pores in the width range of about between 330 and 370 nm.

### EXAMPLE 3: Deposition of a ceramic (alumina) layer onto through hole-type etched aluminum foil in a vacuum evaporation apparatus operating in batch mode

This was carried out similarly to Example 1, with the difference that the substrate was through hole-type etched aluminum foil and the deposited layer had a thickness of 12 µm. The product is a composite membrane having a ceramic selective layer.

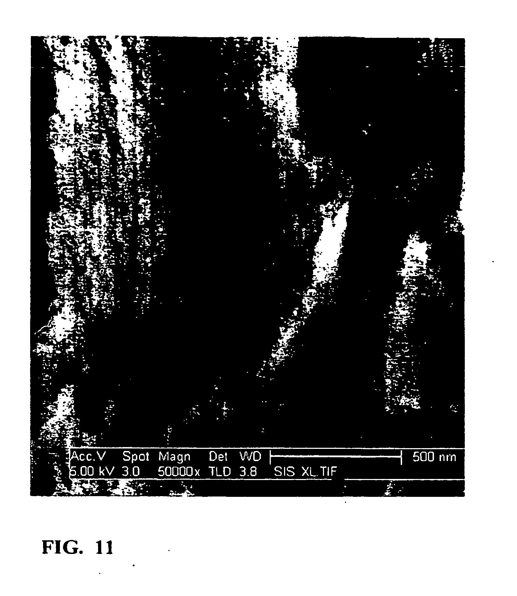

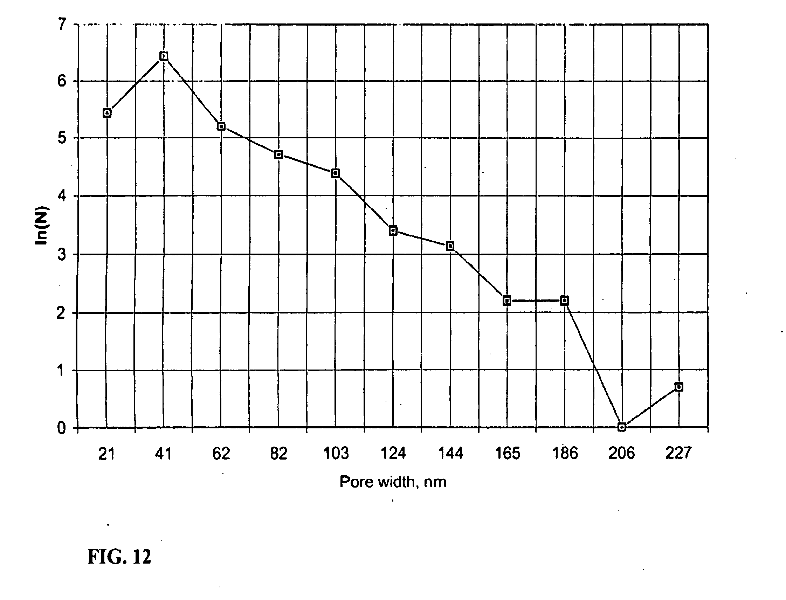

A SEM micrograph of the deposited layer is shown in FIG. 11, from which it can be seen that the deposited layer has a dendrite structure. Further, the surface characterization was performed using the same method and instruments as in Example 1. The resulting pore distribution chart is presented in FIG. 12, from which it can be seen that the deposited layer has narrow pores in the width range of about between 21 and 62 nm, and wide pores of width about 227 nm.

### EXAMPLE 4: Deposition of a ceramic (aluminum/alumina) laver onto through hole-type etched aluminum foil in a vacuum evaporation apparatus operating in batch mode

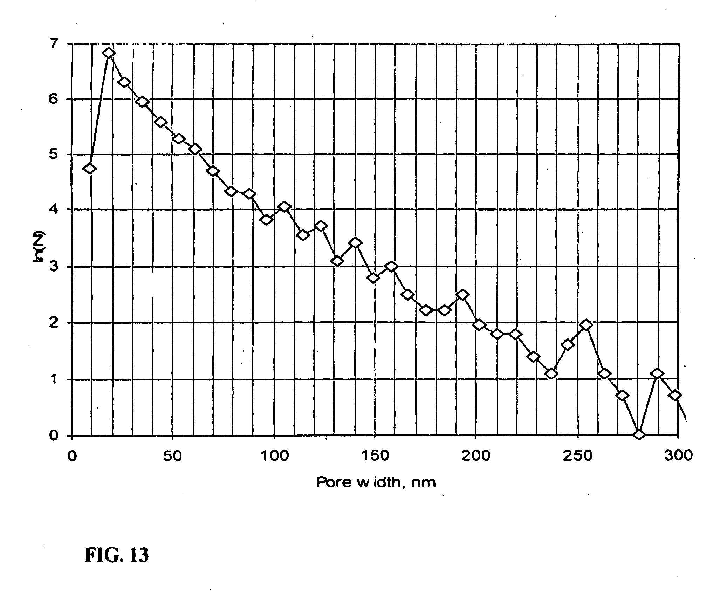

This was carried out similarly to Example 2, with the difference that the substrate was the through hole-type etched aluminum foil and the deposited layer had a thickness of 18 µm. The resultant product was a composite membrane having a ceramic selective layer. The SEM micrograph of the deposited layer is shown in FIG. 2C, from which it can be seen that the deposited layer has a cauliflower-like structure. Further, the surface characterization was performed using the same method and instruments as in Example 1. The resulting pore distribution chart is presented in FIG. 13, from which it can be seen that the deposited layer has narrow pores in the width range of about between 10 and 35 nm, and wide pores in the width range of about between 290 and 300 nm.

### EXAMPLE 5: Single-sided deposition of ceramic layer and layer of selectively binding material

A ceramic layer with a thickness of 5 µm was deposited on one side of a stainless steel mesh from KOIWA KANAAMI CO. with the following characteristics: thickness - 38 ± 2 µm, aperture size - 46 µm, strand width - 18 µm, open area - 51% in the apparatus of and under deposition conditions the same as in Example 1. The obtained product was a membrane having a single fractal-structured surface.

A dispersion of latex containing oxirane groups was prepared according to the technique disclosed in Example 2 of US 5,976,527. The particles of the latex produced then were coated onto the surface of the ceramic layer of the single-fractal-structured-surface membrane by dip coating. Another side of the membrane (which does not contain a ceramic layer) was protected from the latex particles by a screen.

Similar to the system taught in US 5,976,527 the manufactured composite membrane can be used for immobilizing enzymes or proteins.

### EXAMPLE 6: Preparation of a TLC Plate

In a PVD roll coating apparatus, a hard-tempered non-porous aluminum web having 120 micron thickness and 300 mm width, having been pretreated by a plasma process to remove all contaminants from its surface, and on which a tie layer of dense 2-4 nm thick Al₂O₃ has been reactively sputtered to promote interlayer bonding (adhesion), is transported over an aluminum thermal evaporator. The evaporated aluminum reacts in a controlled environment containing an oxygen/argon mixture. During the travel from evaporator to substrate, the reacted aluminum particles cluster to form Al₂O₃ in a unique highly porous structure having a thickness of approximately 250 microns. The alumina clusters then accumulate on the substrate to form the required adsorbent layer for TLC chromatography. The temperature of the substrate reaches 400°C during the coating process. The total pressure in the chamber is maintained at 0.007 mllibar (= 0.00525 torr or 0.0007 kPa).

### EXAMPLE 7: Preparation of a chromatographic column

The coating procedure is similar to Example 6, except that the non-porous substrate was soft tempered aluminum foil, 60 microns thick and 300 mm in width. The coated substrate, when rolled up, may be adapted for insertion into columns of various sizes, e.g., a glass column, inner diameter 16mm, length 100 to 300 mm.

Although the invention has been described with respect to a limited number of embodiments, it is evident that many alternatives, modifications and variations will be apparent to those skilled in the art that fall within the scope of the appended claims.

## Claims

1. A composite membrane suitable for use as a plate in affinity chromatography and adapted for separation of components of fluid mixtures, and which includes a porous, essentially continuous, vacuum-deposited ceramic layer (2), supported by a porous substrate (1), said ceramic layer (2) comprising at at least one metal oxide selected from the group consisting of oxides of aluminum, titanium, tantalum, niobium, zirconium, silicon, thorium, cadmium and tungsten, and wherein there is disposed on the surface of said ceramic layer (2) a selectively sorbent layer (30), wherein the selectively sorbent layer (30) is an affinity ligand.

2. A membrane according to claim 1, wherein the affinity ligand is an amino acid resin, an avidin biotin, or a chelating resin.

3. A membrane according to claim 1, wherein said ceramic layer (2) is disposed on one side only of said substrate (1).

4. A membrane according to claim 1, wherein said ceramic layer (2) is disposed on both sides of said substrate (1).

5. A membrane according to claim 1, wherein said vacuum-deposited ceramic layer (2) has been deposited by physical vapour deposition (PVD).

6. A membrane according to claim 1, wherein said substrate (1) is a metallic substrate.

7. A membrane according to claim 1, wherein said membrane includes a multi-layer system of at least two of said porous, essentially continuous, vacuum-deposited ceramic layers (2), disposed on at least one side of said porous substrate (1), wherein between any successive ceramic layers (2), there is disposed said selectively sorbent layer (30) and there is disposed on the surface of any outermost ceramic layer (2) said selectively sorbent layer (30).

8. A membrane according to claim 7, wherein said multi-layer system is disposed on one side only of said substrate (1).

9. A membrane according to claim 8 wherein a single ceramic layer (2) as defined in claim 1 is disposed on the other side of said substrate and is supported thereby.

10. A membrane according to claim 7, wherein said multi-layer system is disposed on both sides of said substrate (1).

11. A membrane according to claim 7, wherein said multi-layer system is disposed on one side only of said substrate (1).

12. A membrane according to claim 11 wherein a single ceramic layer as defined in claim 1 is disposed on the other side of said substrate (1) and is supported thereby, and wherein there is disposed on the surface of one or both outermost ceramic layer(s) (2) a selectively sorbent layer.

13. A membrane according to claim 7, wherein said multi-layer system is disposed on both sides of said substrate (1), and there is disposed on the surface of at least one of the two outermost ceramic layers (2), a selectively sorbent layer (30) or layers.

14. A membrane according to claim 1 or claim 7, wherein said ceramic layer (2) has a fractal surface structure.

15. A membrane according to claim 14 wherein said fractal surface structure is selected from dendrite, cauliflower-like and coral-like surface structures.

16. A membrane according to claim 1 or claim 7 wherein said ceramic layer (2) consists essentially of a mixture of metal(s) and oxide(s) thereof.

17. A membrane according to claim 16 wherein said ceramic layer consists essentially of a mixture of aluminium metal and alumina.

18. A membrane according to claim 1 or claim 7 wherein said supported ceramic layer (2) is disposed on both sides of said substrate (1), both ceramic sides being also bonded to each other through the pores of the substrate (1), thereby imparting improved mechanical strength to the membrane.

19. A membrane according to claim 1 or any of claims 14 to 18, wherein said substrate (1) is selected from stainless steel mesh and through-hole type etched aluminium foil.

20. A membrane according to claim 7, wherein the average width of the pores of said substrate (1) is greater than the width of the pores of said ceramic layer.

## Patentansprüche

1. Eine Verbundstoffmembran, die sich zur Verwendung als Platte bei Affinitätschromatographie eignet und zur Trennung von Bestandteilen von Flüssigkeitsmischungen adaptiert wurde, und zu der eine poröse, im Wesentlichen durchgehende, Vakuum-aufgetragene Keramikschicht (2) gehört, die durch ein poröses Substrat (1) unterstützt wird, wobei die genannte Keramikschicht (2) zumindest ein Metalloxid enthält, das aus der Gruppe bestehend aus Oxiden von Aluminium, Titan, Niobium, Zirconium, Silikon, Thorium, Cadmium und Wolfram ausgewählt wird, und wobei auf der Oberfläche der genannten Keramikschicht (2) eine selektive Sorptionsmittelschicht (30) aufgetragen wird, wobei die selektive Sorptionsmittelschicht (30) ein Affinitätsligand ist.

2. Eine Membran entsprechend Anspruch 1, wobei der Affinitätsligand ein Aminosäureharz, ein Avidin-Biotin oder ein chelatbildendes Harz ist.

3. Eine Membran entsprechend Anspruch 1, wobei die genannte Keramikschicht (2) nur auf einer Seite des genannten Substrats (1) aufgetragen wird.

4. Eine Membran entsprechend Anspruch 1 wobei die genannte Keramikschicht (2) auf beiden Seiten des genannten Substrats (1) aufgetragen wird.

5. Eine Membran entsprechend Anspruch 1, wobei die genannte Vakuum-aufgetragene Keramikschicht (2) durch physikalische Gasphasenabscheidung (PVD) aufgetragen wurde.

6. Eine Membran entsprechend Anspruch 1, wobei das genannte Substrat (1) ein Metallsubstrat ist.

7. Eine Membran entsprechend Anspruch 1, wobei die genannte Membran ein mehrschichtiges System von mindestens zwei der genannten porösen, durchgehenden, Vakuum-aufgetragenen Keramikschichten (2) umfasst, die zumindest auf einer Seite des genannten porösen Substrats (1) aufgetragen wurden, wobei zwischen allen aufeinanderfolgenden Keramikschichten (2) die genannte selektive Sorptionsmittelschicht (30) aufgetragen ist und auf der Oberfläche einer äußersten Keramikschicht (2) die genannte selektive Sorptionsmittelschicht (30) aufgetragen ist.

8. Eine Membran entsprechend Anspruch 7, wobei das genannte mehrschichtige System auf einer Seite des genannten Substrats (1) aufgetragen ist.

9. Eine Membran entsprechend Anspruch 8, wobei eine einzelne Keramikschicht (2) entsprechend der Definition in Anspruch 1 auf der anderen Seite des genannten Substrats aufgetragen ist und dadurch unterstützt wird.

10. Eine Membran entsprechend Anspruch 7, wobei das genannte mehrschichtige System auf beiden Seiten des genannten Substrats (1) aufgetragen ist.

11. Eine Membran entsprechend Anspruch 7, wobei das genannte mehrschichtige System nur auf einer Seite des genannten Substrats (1) aufgetragen ist.

12. Eine Membran entsprechend Anspruch 11, wobei eine einzelne Keramikschicht gemäß der Definition in Anspruch 1 auf der anderen Seite des genannten Substrats (1) aufgetragen ist und somit unterstützt wird, und wobei auf der Oberfläche einer oder beider äußersten Keramikschicht(en) (2) eine selektive Sorptionsmittelschicht (30) aufgetragen ist.

13. Eine Membran entsprechend Anspruch 7, wobei das genannte mehrschichtige System auf beiden Seiten genannten Substrats (1) aufgetragen ist und auf der Oberfläche von zumindest einer der beiden äußersten Keramikschichten (2) eine selektive Sorptionsmittelschicht oder -schichten (30) aufgetragen ist/sind.

14. Eine Membran entsprechend Anspruch 1 oder Anspruch 7, wobei die genannte Keramikschicht (2) hat eine fraktale Oberflächenstruktur hat.

15. Eine Membran entsprechend Anspruch 14, wobei die genannte fraktale Oberflächenstruktur aus Dendrit, blumenkohlartigen und korallenartigen fraktalen Oberflächenstrukturen ausgewählt wird.

16. Eine Membran entsprechend Anspruch 1 oder Anspruch 7, wobei die genannte Keramikschicht (2) im Wesentlichen aus einer Mischung von Metall(en) und Oxid(en) dieser besteht.

17. Eine Membran entsprechend Anspruch 16, wobei die genannte Keramikschicht im Wesentlichen aus einer Mischung aus Aluminiummetall und Aluminiumoxid besteht.

18. Eine Membran entsprechend Anspruch 1 oder Anspruch 7, wobei die genannte unterstützte Keramikschicht (2) auf beiden Seiten des genannten Substrats (1) aufgetragen wird, beide Keramikseiten zudem miteinander durch die Poren des Substrats (1) verbunden sind, wobei der Membran verbesserte mechanische Belastbarkeit übertragen wird.

19. Eine Membran entsprechend Anspruch 1 oder einem der Ansprüche 14 bis 18, wobei das genannte Substrat (1) aus Edelstahlmaschendraht und durchgangsgebohrter, geätzter Aluminiumfolie ausgewählt wird.

20. Eine Membran entsprechend Anspruch 7, wobei die durchschnittliche Breite der Poren des genannten Substrats (1) größer als die der Poren der genannten Keramikschicht (2) ist.

## Revendications

1. Membrane composite qui peut être utilisée en tant que plaque en chromatographie d'affinité et adaptée pour la séparation des composants de mélanges de fluides, et qui comprend une couche de céramique poreuse, essentiellement continue, déposée sous vide (2), supportée par un substrat poreux (1), ladite couche de céramique (2) comprenant au moins un oxyde métallique choisi dans le groupe constitué par les oxydes d'aluminium, de titane, de niobium, de zirconium, de silicium, de thorium, de cadmium et de tungstène, et dans laquelle il est disposé sur la surface de ladite couche de céramique (2) une couche absorbante de façon sélective (30), dans laquelle la couche absorbante de façon sélective (30) est un ligand d'affinité.

2. Membrane selon la revendication 1, dans laquelle le ligand d'affinité est une résine d'acide aminé, une avidine-biotine, ou une résine chélatante.

3. Membrane selon la revendication 1, dans laquelle ladite couche de céramique (2) est disposée sur un seul côté dudit substrat (1).

4. Membrane selon la revendication 1, dans laquelle ladite couche de céramique (2) est disposée sur les deux côtés dudit substrat (1).

5. Membrane selon la revendication 1, dans laquelle ladite couche de céramique déposée sous vide (2) a été déposée par dépôt physique en phase vapeur (PVD).

6. Membrane selon la revendication 1, dans laquelle ledit substrat (1) est un substrat métallique.

7. Membrane selon la revendication 1, dans laquelle ladite membrane comprend un système multi-couche d'au moins deux desdites couches poreuses, essentiellement des couches de céramique continues, déposées sous vide (2), disposées sur au moins un côté dudit substrat poreux (1), dans lequel, entre toute couche successive de céramique (2), est disposée de manière sélective ladite couche absorbante (30) et est disposée sur la surface d'une couche de céramique la plus externe (2), ladite couche absorbante de façon sélective (30).

8. Membrane selon la revendication 7, dans lequel ledit système multi-couche est disposé sur un seul côté dudit substrat (1).

9. Membrane selon la revendication 8, dans laquelle une seule couche de céramique (2) telle que définie dans la revendication 1 est disposée sur l'autre côté dudit substrat et est ainsi supportée.

10. Membrane selon la revendication 7, dans laquelle ledit système multi-couche est disposé sur les deux côtés dudit substrat (1).

11. Membrane selon la revendication 7, dans laquelle ledit système multi-couche est disposé sur un seul côté dudit substrat (1).

12. Membrane selon la revendication 11, dans laquelle une seule couche de céramique telle que définie dans la revendication 1 est disposée sur l'autre côté dudit substrat (1) et est ainsi supportée, et dans laquelle il est disposé sur la surface de l'une ou des deux couches de céramique les plus externes (ou la plus externe) (2) une couche absorbante de façon sélective.

13. Membrane selon la revendication 7, dans laquelle ledit système multi-couche est disposé sur les deux côtés dudit substrat (1), et il est disposé sur la surface d'au moins une des deux couches de céramique les plus externes (2), une couche absorbante de façon sélective (30) ou des couches.

14. Membrane selon la revendication 1 ou la revendication 7, dans lequel ladite couche de céramique (2) présente une structure de surface fractale.

15. Membrane selon la revendication 14, dans laquelle ladite structure de surface fractale est choisie parmi les dendrites, les structures de surface fractale en chou-fleur et en corail

16. Membrane selon la revendication 1 ou la revendication 7, dans laquelle ladite couche de céramique (2) est constituée essentiellement d'un mélange de métal (ou de métaux) et d'oxyde (ou d'oxydes) de celle-ci.

17. Membrane selon la revendication 16, dans laquelle ladite couche de céramique est constituée essentiellement d'un mélange d'aluminium métallique et d'alumine.

18. Membrane selon la revendication 1 ou la revendication 7, dans laquelle ladite couche de céramique supportée (2) est disposée sur les deux côtés dudit substrat (1), les deux parties en céramique étant en outre liées les unes aux autres à travers les pores du substrat (1), conférant ainsi une meilleure résistance mécanique à la membrane.

19. Membrane selon la revendication 1 ou l'une quelconque des revendications 14 à 18, dans laquelle ledit substrat (1) est choisi parmi une maille en acier inoxydable et une feuille d'aluminium gravée de type trou traversant.

20. Membrane selon la revendication 7, dans laquelle la largeur moyenne des pores dudit substrat (1) est supérieure à la largeur des pores de ladite couche de céramique.
